# EUROPEAN PATENT APPLICATION

(11) **EP 4 631 784 A1**
(43) Date of publication of application: **15.10.2025**
(21) Application number: 23899242.4
(22) Date of filing: 09.03.2023
(51) Int. Cl.: B60N 2/64

(54) **VENTILATED BACK CUSHION FOR AUTOMOBILE SEAT**

(30) Priority: 05.12.2022 CN 202223269440 U
(71) Applicant: Zhejiang Tianhong Auto Accessories Co., Ltd, Taizhou, Zhejiang 317200 (CN)
(72) Inventor: CHEN, Tongchai, Taizhou, Zhejiang 317200 (CN)
(74) Representative: Cabinet Chaillot
(86) International application number: PCT/CN2023/080639
(87) International publication number: WO 2024/119642

(57) **Abstract**

A ventilated back cushion for an automobile seat, comprising a back cushion body, wherein the back cushion body is provided with a plurality of ventilation holes, and a rear surface of the back cushion body is provided with a fan mounting position within an area of the ventilation holes; the back cushion body comprises an edge part and, successively arranged from top to bottom, a body upper part, a body middle part, and a body lower part that are all located within an area surrounded by the edge part; a rear surface of the body lower part is provided with at least one support protrusion; the fan mounting position is located on a rear side of the body middle part and is close to the body lower part. The invention greatly ameliorates the problems of reduced air outlet volume and obstructed airflow.

## Description

### TECHNICAL FIELD

The invention relates to the field of automobile seat cushions, and particularly relates to a ventilated back cushion for an automobile seat.

### BACKGROUND ART

Automobiles are a relatively common and widely used means of transportation in the current era. With the gradual development of the times and the continuous improvement of people's daily living standards, there are increasing demands for driving comfort in automobiles. Not only is high maneuverability required, but better comfort is also needed.

However, during the production process of automobiles, each model needs to be tuned according to its usage environment. For example, if tuned towards comfort, the vehicle's maneuverability will be partially sacrificed, and vice versa. Especially for SUVs and off-road vehicle tuning, the sacrifice in comfort will be relatively greater.

For drivers and passengers, the automobile seat is the main source of comfort. Therefore, there are many cushions and back cushions for automobile seats. Back cushions, such as breathable cushions, are relatively common in daily life. In hot summers, drivers and passengers easily sweat inside the car, especially on the back. Sweating on the back severely affects comfort. Such breathable cushions can improve breathability to a certain extent, making drivers and passengers more comfortable. For example, Chinese Patent Publication No. CN203211145U discloses a ventilated back cushion for an automobile seat, comprising a cushion cover, a plug with a speed control device, a cushion main body inside the cushion cover, and a front plate; fan mounting compartments are provided on both sides of the front lower end of the cushion main body, and turbine fans are arranged inside the fan mounting compartments; air outlet guide grooves are arranged around the fan mounting compartments; the front plate is arranged at the front end of the cushion main body, and corresponding to the air outlet guide grooves, air outlets are provided on the front plate.

Regarding the above related art, the inventor believes: although this ventilated cushion can provide ventilation, long-term sitting can still lead to poor ventilation. The main reasons are that during driving, the cushion is subjected to significant backward pressure. Due to vehicle bumps and continuous adjustment of sitting posture by the driver/passenger, the cushion can shift. Moreover, prolonged leaning by the driver/passenger causes the fan position to become too close to the seat and the driver/passenger's back, resulting in reduced air outlet volume and even causing the fan to burn out due to obstructed airflow.

### SUMMARY OF THE INVENTION

To ameliorate the problems in the related art where prolonged leaning by the driver/passenger causes the fan position to become too close to the seat and the driver/passenger's back, resulting in reduced air outlet volume and even causing the fan to burn out due to obstructed airflow, the invention provides a ventilated back cushion for an automobile seat.

The ventilated back cushion for an automobile seat provided by the invention adopts the following technical solutions.

A ventilated back cushion for an automobile seat, comprising a back cushion body, wherein the back cushion body is provided with a plurality of ventilation holes, and a rear surface of the back cushion body is provided with a fan mounting position within an area of the ventilation holes; the back cushion body comprises an edge part and, successively arranged from top to bottom, a body upper part, a body middle part, and a body lower part that are all located within an area surrounded by the edge part; a rear surface of the body lower part is provided with at least one support protrusion; the fan mounting position is located on a rear side of the body middle part and is close to the body lower part.

Optionally, the body upper part and the body lower part both incline towards the body middle part and towards a front of the back cushion body; the body middle part curves from its upper and lower end parts towards its middle part and towards the front of the back cushion body.

Optionally, the body upper part, the body middle part, and the body lower part each have an arcuate transition surface extending from a middle towards left and right sides.

Optionally, the edge part located on left and right sides of the body middle part curves towards a front of the back cushion body to form an arcuate support edge.

Optionally, a front surface of the edge part is higher than front surfaces of the body upper part, body middle part, and body lower part; transition segments are provided at positions of the edge part located on left and right sides of the body lower part, and a front surface of each transition segment inclines towards a rear of the back cushion body, forming a connection between the front surface of the transition segment and the front surface of the body lower part.

Optionally, a plurality of longitudinal flow guide grooves are provided on a front surface of the back cushion body, and the flow guide grooves each extend from a position at the body lower part and/or a lower side of the body middle part towards the body upper part and/or an upper side edge part of the body middle part.

Optionally, a rear surface of the back cushion body protrudes rearward at a position corresponding to each flow guide groove to form a reinforcing rib; the reinforcing ribs each extend from a position at the body lower part and/or a lower side of the body middle part towards the body upper part and/or an upper side of the body middle part, and an end of the reinforcing rib located at an upper side of the body upper part and/or the upper side of the body middle part is not connected to the edge part; the fan mounting position is arranged on the reinforcing rib at the lower side of the body middle part.

Optionally, a groove is provided on a front surface of the body lower part at a position corresponding to the support protrusion.

Optionally, a lower end of the back cushion body is connected to an elastic support member extending rearward and inclined downward, and the elastic support member is connected to the lower end of the back cushion body via an arcuate transition connector.

Optionally, left and right side edges of the elastic support member are tapered toward each other in a rearward direction.

To summarize, the invention achieves at least one of the following beneficial technical effects.
1. By providing the support protrusion, a large ventilation space is formed between the rear surface of the cushion and the seat. This ventilation space can ensure sufficient ventilation even without a fan installed, especially when the cushion is squeezed backward by the occupant; the convective effect of air through the ventilation holes becomes stronger. Moreover, by locating the fan mounting position near the support protrusion, even when the occupant leans back, the fan position does not become too close to the seat or the occupant's back. This greatly ameliorates the problems of reduced air outlet volume and obstructed airflow, resulting in stronger, more significant, and better ventilation.
2. Through the inclined structure and arcuate transition surfaces on the body upper part, body middle part, and body lower part, during use, it can effectively support the occupant's waist and back, and better improves the air outlet volume and airflow.
3. Through the arrangement of the support edge, it can significantly improve the occupant's riding experience. Whether driving or resting in the car, it can provide good support to the sides of the occupant's waist.
4. By setting the flow guide grooves, air can better diffuse towards the edge part after encountering obstruction, effectively improving ventilation without affecting the air outlet volume and airflow.
5. By setting the reinforcing ribs, the support strength is effectively increased, preventing severe deformation of the cushion due to prolonged leaning. This largely ensures the normal operation of the fan and also avoids damage to the fan caused by squeezing to a certain extent.
6. By providing a groove on the front surface of the body lower part corresponding to the support protrusion, air can better diffuse towards the edge part after encountering obstruction, effectively improving ventilation.
7. By setting the elastic support member, it can prevent the cushion from shifting due to posture adjustment during prolonged leaning. Additionally, the elastic support member can help reduce the problem of the fan position being squeezed by the backward leaning force, greatly improving the reliability of the cushion.

### BRIEF DESCRIPTION OF ACCOMPANY DRAWINGS

FIG. 1 is a schematic front view of an embodiment according to the application.
FIG. 2 is a schematic rear view of an embodiment according to the application.
FIG. 3 is a partial enlarged schematic view of part A in FIG. 1.

In the figures: 1 refers to the ventilation hole; 2 refers to the fan mounting position; 3 refers to the edge part; 4 refers to the support edge; 5 refers to the transition segment; 6 refers to the support protrusion; 7 refers to the groove; 8 refers to the flow guide groove; 9 refers to the reinforcing rib; 10 refers to the elastic support member; 11 refers to the transition connector.

### SPECIFIC EMBODIMENT OF THE INVENTION

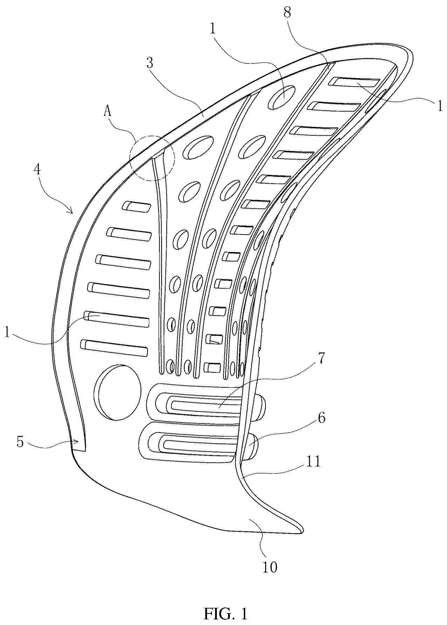

The invention is further described in detail hereinafter with reference to FIGS. 1-3.

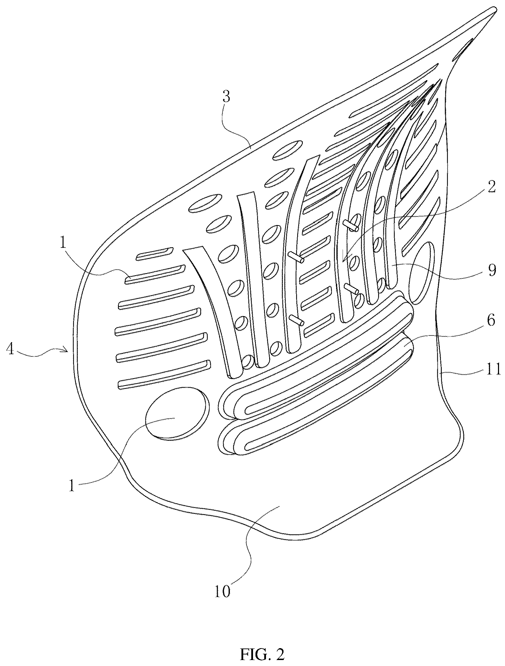

The embodiment discloses a ventilated back cushion for an automobile seat. With reference to FIGS. 1 and 2, the back cushion body is provided with a plurality of ventilation holes 1, and a rear surface of the back cushion body is provided with a fan mounting position 2 within an area of the ventilation holes 1; the back cushion body comprises an edge part 3 and, successively arranged from top to bottom, a body upper part, a body middle part, and a body lower part; the edge part 3 surrounds an area open at the lower side; the body upper part, body middle part, and body lower part are all located within the area surrounded by the edge part 3.

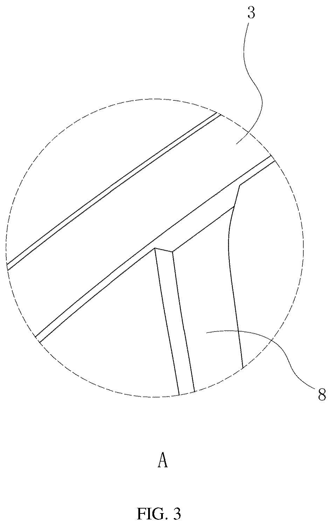

In the embodiment, the edge part 3 located on the left and right sides of the body middle part curves towards the front of the back cushion body to form an arcuate support edge 4. With reference to FIG. 3, the front surface of the edge part 3 is higher than the front surfaces of the body upper part, body middle part, and body lower part, forming a stepped structure between the edge part 3 and the body upper/middle/lower parts, which enhances ventilation, making airflow smoother. Transition segments 5 are provided at the positions of the edge part 3 located on the left and right sides of the body lower part. The front surface of each transition segment 5 inclines towards the rear of the back cushion body, forming a connection between the front surface of the transition segment 5 and the front surface of the body lower part. This design prevents the left and right edge parts 3 of the body lower part from pressing against the occupant's hips for extended periods during driving/passengering, improving comfort.

With reference to FIGS. 1 and 2, the rear surface of the body lower part is provided with at least one support protrusion 6, forming a large ventilation space between the rear surface of the cushion and the seat. This ventilation space ensures sufficient air volume even without a fan installed, especially when the cushion is squeezed backward by the occupant, enhancing the convective effect of air through the ventilation holes. A groove 7 is provided on the front surface of the body lower part at a position corresponding to the support protrusion 6. In this embodiment, two support protrusions 6 are spaced apart. Providing the groove 7 corresponding to the support protrusion 6 allows air encountering obstruction to better diffuse towards the edge part 3, effectively improving ventilation. The groove 7 also helps reduce manufacturing costs and save material to some extent while increasing ventilation.

The fan mounting position 2 is located on the rear side of the body middle part and close to the body lower part. In this embodiment, the fan mounting position 2 is located above the support protrusion 6, which allows the installed fan to be closer to the support protrusion 6. Locating the fan mounting position 2 near the support protrusion 6 prevents the fan position from becoming too close to the seat or the occupant's back even when leaning back, greatly ameliorating the problems of reduced air outlet volume and obstructed airflow. Installing a fan at the mounting position further enhances the ventilation effect, making it more significant and effective.

To improve driving comfort, the body upper part and body lower part both incline towards the body middle part and towards the front of the back cushion body; the body middle part curves from its upper and lower end parts towards its middle portion and towards the front of the back cushion body. Simultaneously, the body upper part, body middle part, and body lower part each have an arcuate transition surface extending from the middle towards the left and right sides. This design allows the cushion to better fit the occupant's waist and back during driving/passengering, providing excellent support.

With reference to FIG. 1, a plurality of longitudinal flow guide grooves 8 are provided on a front surface of the back cushion body, and the flow guide grooves 8 each extend from a position at the body lower part and/or a lower side of the body middle part towards the body upper part and/or an upper side edge part 3 of the body middle part. In this embodiment, the flow guide grooves 8 extend from the lower side of the body middle part towards the body upper part and the upper side edge part 3 of the body middle part, connecting to the edge part 3.

Meanwhile, with reference to FIG. 2, the rear surface of the back cushion body protrudes rearward at a position corresponding to each flow guide groove 8 to form a reinforcing rib 9. The reinforcing ribs 9 each extend from a position at the body lower part and/or the lower side of the body middle part towards the body upper part and/or the upper side of the body middle part. In this embodiment, the reinforcing ribs 9 extend from the lower side of the body middle part towards the upper side of the body middle part. The end of the reinforcing rib 9 located at the upper side of the body upper part and/or the upper side of the body middle part is not connected to the edge part 3. The fan mounting position 2 is arranged on the reinforcing rib 9 at the lower side of the body middle part. In this embodiment, positioning posts are spaced apart on two adjacent middle reinforcing ribs 9, and the fan is mounted and fixed via these posts on the two reinforcing ribs 9.

To prevent the cushion from shifting due to occupant posture adjustment, the lower end of the back cushion body is connected to an elastic support member 10 extending rearward and inclined downward. The elastic support member 10 is connected to the lower end of the back cushion body via an arcuate transition connector 11. In this embodiment, the left and right side edges of the elastic support member 10 gradually converge inwards towards the rear, which ensures the elastic support member can be easily inserted into the gap of the automobile seat while effectively reducing material waste and saving costs, without altering the elasticity of the transition connector 11 and the area of the elastic support member 10 near it.

The above are preferred embodiments of the invention, which do not limit the scope of protection. Therefore, any equivalent modifications made based on the structure, shape, or principle of the invention shall be covered within the protection scope of the invention.

## Claims

1. A ventilated back cushion for an automobile seat, comprising a back cushion body, wherein the back cushion body is provided with a plurality of ventilation holes, and a rear surface of the back cushion body is provided with a fan mounting position within an area of the ventilation holes; the back cushion body comprises an edge part and, successively arranged from top to bottom, a body upper part, a body middle part, and a body lower part that are all located within an area surrounded by the edge part; a rear surface of the body lower part is provided with at least one support protrusion; the fan mounting position is located on a rear side of the body middle part and is close to the body lower part.

2. The ventilated back cushion for an automobile seat of claim 1, wherein the body upper part and the body lower part both incline towards the body middle part and towards a front of the back cushion body; the body middle part curves from its upper and lower end parts towards its middle part and towards the front of the back cushion body.

3. The ventilated back cushion for an automobile seat of claim 1 or 2, wherein the body upper part, the body middle part, and the body lower part each have an arcuate transition surface extending from a middle towards left and right sides.

4. The ventilated back cushion for an automobile seat of claim 1, wherein the edge part located on left and right sides of the body middle part curves towards a front of the back cushion body to form an arcuate support edge.

5. The ventilated back cushion for an automobile seat of claim 1 or 4, wherein a front surface of the edge part is higher than front surfaces of the body upper part, body middle part, and body lower part; transition segments are provided at positions of the edge part located on left and right sides of the body lower part, and a front surface of each transition segment inclines towards a rear of the back cushion body, forming a connection between the front surface of the transition segment and the front surface of the body lower part.

6. The ventilated back cushion for an automobile seat of claim 1, wherein a plurality of longitudinal flow guide grooves are provided on a front surface of the back cushion body, and the flow guide grooves each extend from a position at the body lower part and/or a lower side of the body middle part towards the body upper part and/or an upper side edge part of the body middle part.

7. The ventilated back cushion for an automobile seat of claim 6, wherein a rear surface of the back cushion body protrudes rearward at a position corresponding to each flow guide groove to form a reinforcing rib; the reinforcing ribs each extend from a position at the body lower part and/or a lower side of the body middle part towards the body upper part and/or an upper side of the body middle part, and an end of the reinforcing rib located at an upper side of the body upper part and/or the upper side of the body middle part is not connected to the edge part; the fan mounting position is arranged on the reinforcing rib at the lower side of the body middle part.

8. The ventilated back cushion for an automobile seat of claim 1, wherein a groove is provided on a front surface of the body lower part at a position corresponding to the support protrusion.

9. The ventilated back cushion for an automobile seat of claim 1, wherein a lower end of the back cushion body is connected to an elastic support member extending rearward and inclined downward, and the elastic support member is connected to the lower end of the back cushion body via an arcuate transition connector.

10. The ventilated back cushion for an automobile seat of claim 9, wherein left and right side edges of the elastic support member are tapered toward each other in a rearward direction.
